# EUROPEAN PATENT APPLICATION

(11) **EP 4 432 738 A1**
(43) Date of publication of application: **18.09.2024**
(21) Application number: 22889767.4
(22) Date of filing: 18.10.2022
(51) Int. Cl.: H04W 48/16, H04W 24/02, H04W 36/36

(54) **WIRELESS TERMINAL, RADIO ACCESS NETWORK NODE, AND METHODS THEREFOR**

(30) Priority: 08.11.2021 JP 2021182104
(71) Applicant: NEC Corporation, 108-8001 Tokyo (JP)
(72) Inventor: FUTAKI, Hisashi, Tokyo 108-8001 (JP)
(74) Representative: MacDougall, Alan John Shaw
(86) International application number: PCT/JP2022/038758
(87) International publication number: WO 2023/079946

(57) **Abstract**

A radio terminal (1) receives, from a network, control information indicating whether or not the radio terminal (1) is allowed to perform a particular action based on an inference result of machine learning-based artificial intelligence. The radio terminal (1) makes a prediction or decision using a trained machine learning model. If the control information allows performing the particular action based on the inference result, the radio terminal (1) performs the particular action triggered by the prediction or decision. For example, this helps to enable a network (e.g., a radio access network (RAN) node) to control whether or not a radio terminal is allowed to perform an action based on a prediction or decision made by a trained machine-learning model.

## Description

### Technical Field

The present disclosure relates to radio communication networks, and in particular to the use of artificial intelligence (AI) in radio communication networks.

### Background Art

The 3rd Generation Partnership Project (3GPP (registered trademark)) is discussing the application or introduction of AI or machine learning (ML) to 5G. AI/ML can be considered for both network internal functions and air interfaces (i.e., Uu). In 3GPP Release 17, the Radio Access Network (RAN) Working Group #3 (RAN3) is discussing network-based AI/ML without User Equipment (UE) involvement, where examples of targets include energy saving, load balancing, and mobility optimization (see, for example, Non-Patent Literature 1 and 2). In network-based AI/ML, the network performs AI/ML inference. AI inference is a prediction or decision based on a trained machine learning model. AI/ML inference functionality may be located in the Next Generation Radio Access Network (NG-RAN) (e.g., gNB). The training of a machine learning model can be performed by the NG-RAN. Alternatively, Operation, Administration and Maintenance (OAM) can train a machine learning model and provide a trained machine learning model (i.e., trained parameters) to the NG-RAN (e.g., gNB).

In addition, network-based AI/ML with UE involvement and UE-based AI/ML have been proposed for 3GPP Release 18 (see, for example, Non-Patent Literature 3-5). In UE-based AI/ML, the UE performs AI/ML inference. Possible use cases for AL/ML for air interface include Channel State Information (CSI) feedback compression, beam management, positioning, Reference signal (RS) overhead reduction, and mobility. In UE-based AI/ML, the UE runs an AI model (i.e., a trained machine learning model) and obtains AI inference results locally. For example, the UE can predict a future event or measurement based on past measurements. The UE can feed back a predicted result (e.g., mobility or beam prediction) to the network (e.g., gNB).

### Citation List

### Non Patent Literature

[Non-Patent Literature 1] CMCC, "Revised SID: Study on enhancement for data collection for NR and ENDC", RP-201620, 3GPP TSG-RAN Meeting #89e, Electronic meeting, September 14-18, 2020 [Non-Patent Literature 2] 3GPP TR 37.817 V0.3.0 (2021-08) "3rd Generation Partnership Project; Technical Specification Group RAN; Evolved Universal Terrestrial Radio Access (E-UTRA) and NR; Study on enhancement for Data Collection for NR and EN-DC (Release 17)", September 23, 2021
[Non-Patent Literature 3] Ericsson, "Views on Rel-18 AI/ML on Air-Interface", RP-212346, 3GPP TSG-RAN Meeting#93e, Electronic meeting, September 13-17, 2021
[Non-Patent Literature 4] ZTE, "Support of Artificial Intelligence Applications for 5G Advanced", RP-212383, 3GPP TSG-RAN Meeting#93e, Electronic meeting, September 13-17, 2021
[Non-Patent Literature 5] Xiaomi, "Mobility enhancement by UE based AI", RP-211787, 3GPP TSG-RAN Meeting#93e, Electronic meeting, September 13-17, 2021

### Summary of Invention

### Technical Problem

The inventor has studied UE-based AI/ML and found various problems. One of these problems concerns the conditions for executing UE-based AI/ML. For example, the UE performs a certain action based on a prediction or decision made by a machine learning model. However, it may not be appropriate for the UE to perform this action freely if this UE action involves interaction with the network or may affect network performance. Alternatively, it may not be appropriate for the UE to freely perform actions that are triggered by AI inference rather than triggered by rules (or criteria or formulae) defined in the 3GPP specification. Actions triggered by rules (or criteria or formulae) defined in the 3GPP specifications include, for example, sending measurement reports for handover, performing conditional mobility, beam selection, and cell (re)selection.

One of the objects to be attained by example embodiments disclosed herein is to provide apparatuses, methods, and programs that contribute to solving at least one of a plurality of problems related to UE-based AI/ML, including the problems described above. It should be noted that this object is merely one of the objects to be attained by the example embodiments disclosed herein. Other objects or problems and novel features will be made apparent from the following description and the accompanying drawings.

### Solution to Problem

In a first aspect, a radio terminal includes at least one memory and at least one processor coupled to the at least one memory. The at least one processor is configured to receive, from a network, control information indicating whether or not the radio terminal is allowed to perform a particular action based on an inference result of machine learning-based artificial intelligence. The at least one processor is configured to make a prediction or decision using a trained machine learning model. The at least one processor is configured to, if the control information allows performing the particular action based on the inference result, perform the particular action triggered by the prediction or decision.

In a second aspect, a method performed by a radio terminal includes the steps of:
(a) receiving, from a network, control information indicating whether or not the radio terminal is allowed to perform a particular action based on an inference result of machine learning-based artificial intelligence;
(b) making a prediction or decision using a trained machine learning model; and
(c) if the control information allows performing the particular action based on the inference result, performing the particular action triggered by the prediction or decision.

In a third aspect, a radio access network (RAN) node includes at least one memory and at least one processor coupled to the at least one memory. The at least one processor is configured to transmit, to a radio terminal, control information indicating whether or not the radio terminal is allowed to perform a particular action based on an inference result of machine learning-based artificial intelligence. The control information causes the radio terminal to perform the particular action triggered by a prediction or decision using a trained machine learning model, if the control information allows performing the particular action based on the inference result.

In a fourth aspect, a method performed by a RAN node includes transmitting, to a radio terminal, control information indicating whether or not the radio terminal is allowed to perform a particular action based on an inference result of machine learning-based artificial intelligence. The control information causes the radio terminal to perform the particular action triggered by a prediction or decision using a trained machine learning model, if the control information allows performing the particular action based on the inference result.

A fifth aspect is directed to a program. The program includes a set of instructions (software codes) that, when loaded into a computer, cause the computer to perform the method described in the second or fourth aspect.

### Advantageous Effects of Invention

According to the aspects described above, it is possible to provide apparatuses, methods and programs that contribute to solving at least one of a plurality of problems related to UE-based AI/ML.

### Brief Description of Drawings

Fig. 1 shows an example configuration of a radio communication system according to an example embodiment;
Fig. 2 is a sequence diagram showing an example of the operation of a radio terminal and a radio access network node according to an example embodiment;
Fig. 3 is a flowchart showing an example of the operation of a radio terminal according to an example embodiment;
Fig. 4A shows a specific example of a format of control information according to an example embodiment;
Fig. 4B shows a specific example of a format of control information according to an example embodiment;
Fig. 5 is a sequence diagram showing an example of the operation of a radio terminal and a radio access network node according to an example embodiment;
Fig. 6 shows a specific example of a format for an AI interest indication according to an example embodiment;
Fig. 7 is a flowchart showing an example of the operation of a radio access network node according to an example embodiment;
Fig. 8 is a block diagram showing an example configuration of a radio terminal according to an example embodiment; and
Fig. 9 is a block diagram showing an example configuration of a radio access network node according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

The multiple example embodiments described below may be implemented independently or in combination, as appropriate. These example embodiments include novel features different from each other. Accordingly, these example embodiments contribute to attaining objects or solving problems different from one another and contribute to obtaining advantages different from one another.

The example embodiments shown below are described primarily for the 3GPP fifth generation mobile communication system (5G system). However, these example embodiments may be applied to other radio communication systems.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

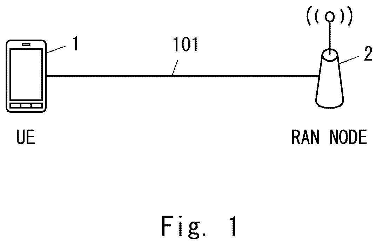

First, the configuration and operation of a plurality of network elements common to a plurality of example embodiments will be described. Fig. 1 illustrates an example of the configuration of a radio communication system related to a plurality of example embodiments. In the example of Fig. 1, the radio communication system includes a radio terminal (i.e., UE) 1 and a radio access network (RAN) node (e.g., gNB) 2. Each of the elements (network functions) shown in Fig. 1 can be implemented, for example, as a network element on dedicated hardware, as a software instance running on dedicated hardware, or as a virtualized function instantiated on an application platform.

The UE 1 has at least one radio transceiver and is configured to communicate wirelessly with the RAN node 2. The UE 1 is connected to the RAN node 2 via an air interface 101. The RAN node 2 is configured to manage a cell and to communicate wirelessly with multiple UEs, including the UE 1, using a cellular communication technology (e.g., NR Radio Access Technology (RAT)). The UE 1 may be simultaneously connected to multiple RAN nodes for Dual Connectivity (DC).

The RAN Node 2 may be a Central Unit (e.g., gNB-CU) in a Cloud RAN (C-RAN) deployment, or a combination of a CU and one or more Distributed Units (e.g., gNB-DUs). C-RAN is also referred to as CU/DU split. In addition, a CU may include a Control Plane (CP) unit (e.g., gNB-CU-CP) and one or more User Plane (UP) units (e.g., gNB-CU-UP). Accordingly, the RAN nodes 2 may be a CU-CP or a combination of a CU-CP and a CU-UP. A CU may be a logical node that hosts the Radio Resource Control (RRC), Service Data Adaptation Protocol (SDAP), and Packet Data Convergence Protocol (PDCP) protocols of a gNB (or the RRC and PDCP protocols of a gNB). A DU may be a logical node that hosts the Radio Link Control (RLC), Medium Access Control (MAC), and Physical (PHY) layers of a gNB.

The UE 1 may perform AI/ML inference locally. This AI/ML inference may relate to the optimization of a radio access network. The UE 1 may perform (or run) AI inference on a trained machine learning model and perform one or more actions according to a prediction or decision based on the AI inference. The machine learning model may be any model known in the field of machine learning, including deep learning. The machine learning model can be, for example, but not limited to, a neural network model, a support vector machine model, a decision tree model, a random forest model, or a K-nearest neighbor model.

By way of example, but not limitation, the prediction or decision based on AI inference by the UE 1 and the one or more actions triggered thereby relate to beam management or mobility or both. By way of example, but not limitation, the one or more actions include at least one of cell reselection, sending a measurement report, performing conditional mobility, or downlink beam selection. The downlink beam may be a Synchronization Signal (SS)/Physical Broadcast Channel (PBCH) block (SSB) beam. For example, the machine learning model may output predictions of a candidate cell for cell reselection, a target cell or node for handover, a candidate cell or node for conditional mobility, a candidate beam for beam selection, or a UE trajectory. Additionally or alternatively, the machine learning model may predict or determine when to perform an action for mobility or beam management.

The cell reselection may be performed when the UE 1 is in RRC_IDLE or RRC_INACTIVE.

Th mobility can be performed when the UE 1 is in RRC_CONNECTED. The mobility in RRC_CONNECTED may be a handover. The handover may be a Dual Active Protocol Stack (DAPS) handover. Additionally or alternatively, the mobility in RRC_CONNECTED can be related to various mobilities in DC. Specifically, the mobility may be a change of the primary cell of a Master Cell Group (MCG) in DC, an inter-Master Node (MN) handover in DC, a secondary node change in DC, or an addition or modification of the primary cell of a secondary cell group in DC.

The conditional mobility can be performed when the UE 1 is in RRC_CONNECTED. The conditional mobility may be a conditional handover. Additionally or alternatively, the conditional mobility may be related to various mobility in DC. Specifically, the conditional mobility may be a change of the primary cell of a Master Cell Group (MCG) in DC, an inter-Master Node (MN) handover in DC, a change of a secondary node in DC, or an addition or modification of the primary cell of a secondary cell group in DC.

The downlink beam selection can be done in a Beam Failure Recovery (BFR) procedure.

Training of the machine learning model for AI/ML inference by the UE 1 may be performed by the UE 1 or by the network (e.g., OAM, RAN node 2). The method of this training can be offline training, online training, or a combination of both.

Similarly, the RAN node 2 may perform AI/ML inference. This AI/ML inference may relate to the optimization of a radio access network. The RAN node 2 may perform (or run) AI inference on a trained machine learning model and perform one or more actions according to a prediction or decision based on the AI inference. The machine learning model may be any model known in the field of machine learning, including deep learning. The machine learning model can be, for example, but not limited to, a neural network model, a support vector machine model, a decision tree model, a random forest model, or a K-nearest neighbor model.

By way of example, but not limitation, the prediction or decision based on AI inference by the RAN node 2 and the one or more actions triggered thereby may relate to at least one of energy saving, load balancing, mobility optimization, CSI feedback enhancement, or positioning accuracy enhancement. For example, the prediction or decision by the machine learning model may relate to one or both of energy saving strategies and mobility strategies. For mobility strategies, the machine learning model may output predictions of a target cell or node for handover, a candidate cell or node for conditional mobility, or a UE trajectory.

Training of the machine learning model for AI/ML inference by the RAN node 2 may be performed by the RAN node 2 or by the OAM. The method of this training can be offline training, online training, or a combination of both.

### First Example Embodiment

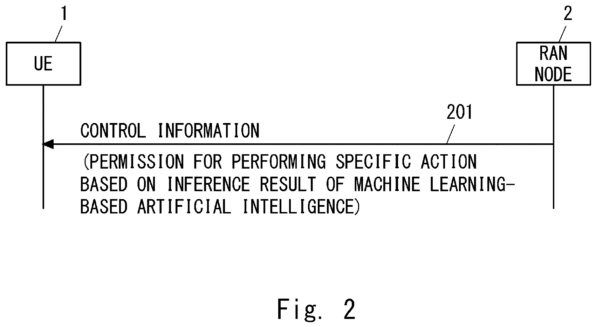

An example of the configuration of a radio communication system according to this example embodiment may be similar to the example shown in Fig. 1. Fig. 2 shows an example of the operation of the UE 1 and RAN node 2 for UE-based AI/ML, i.e., for the UE 1 to perform AI inference on a machine learning model. In step 201, the RAN node 2 transmits control information to the UE 1. The control information may be transmitted via broadcast (e.g., system information). The system information may be any System Information Block. Alternatively, the control information may be transmitted via dedicated signaling for the UE 1. The dedicated signaling may be dedicated RRC signaling, e.g., RRC Reconfiguration message, RRC Reestablishment message, RRC Resume message, or RRC Setup message. The control information may be an information element contained in an SIB or in dedicated RRC signaling. For example, but not limited to, the name of the information element may be "AI configuration".

The control information indicates whether or not the UE 1 is allowed to perform a particular action based on an inference result of machine learning-based artificial intelligence. In other words, the control information indicates whether or not the UE 1 is permitted to perform a particular action triggered by a prediction or decision using a trained machine learning model. If the control information indicates that it is allowed, the control information causes the UE 1 to perform the particular action triggered by a prediction or decision using a trained machine learning model. The RAN node 2 may transmit the control information (step 201) only if the UE 1 is allowed to perform the particular action based on an AI/ML inference result. In this case, the transmission of the control information may implicitly indicate the permission to perform the particular action based on the AI/ML inference result at the UE 1.

The term " inference result of machine learning-based artificial intelligence" can be rephrased as "inference result of artificial intelligence", "prediction result of self-learning (by a UE)", "prediction result of autocorrection", or "prediction result of optimization (algorithm)". The expression " perform a particular action based on an inference result of machine learning-based artificial intelligence" can be paraphrased as "apply an inference result of artificial intelligence to a particular action", "perform self-optimization (by a UE) for a particular action", or "apply an optimization (algorithm) to a particular action". The term "optimization of a radio access network" may mean, for example, optimization of functions or processing of a radio network (e.g., one or more RAN nodes), or optimization of values or configurations of radio parameters that a radio network configures for a radio terminal (e.g., one or more UEs).

Specific examples of the prediction or decision based on AI inference by the UE 1 and the one or more actions triggered thereby are as described above. By way of example, but not limitation, the particular action triggered by a prediction or decision in the UE 1 using a machine learning model relates to at least one of beam management, mobility, CSI feedback, or positioning (or location estimation). The particular actions include for example, but are not limited to, at least one of cell reselection, transmission of a measurement report, execution of conditional mobility, or selection of a downlink beam. Transmission of a measurement report may trigger a decision by the network (e.g., RAN node 2) to initiate mobility (e.g., handover).

By way of example, but not limitation, the particular action relates to CSI feedback. The particular action may be adjusting a timing (e.g., period) of a CSI report. Additionally or alternatively, the particular action may be reducing or compressing the amount of information in a CSI report (e.g., beam information, channel matrix, precoding matrix).

By way of example, but not limitation, the particular action relates to positioning (or location estimation) of the UE 1. The particular action may be a correction of information used for location estimation or a correction of a location estimation result.

Additionally or alternatively, the particular action may include transmitting assistance information (e.g., UE assistance information) to the network (e.g., RAN node 2) indicating a result of the prediction or decision at the UE 1 using a first machine learning model. The assistance information may be used to train a second machine learning model for optimizing the radio access network. The assistance information may be used to perform inference on a second trained machine learning model for optimizing the radio access network. The second machine learning model and the second trained machine learning model may be located at the RAN node 2 or at the OAM. Additionally or alternatively, the assistance information may be used to train (e.g., offline reinforcement learning) the first machine learning model deployed in the UE 1.

The control information may indicate whether or not performing the particular action based on the AI inference result is allowed instead of, or in addition to, performing the particular action based on a predefined rule (or criterion or formula). The predefined rule may be a rule predefined in a 3GPP specification. Alternatively, the predefined rule may be a rule preconfigured by the network (e.g., RAN node 2). More specifically, the predefined rule may be a cell reselection rule (or criteria or formula), a measurement reporting rule (or criteria or formula), an execution rule (or criteria or formula) for conditional mobility, or a beam selection rule (or criteria or formula), as specified in the 3GPP specification or configured by the network. These rules (or criteria or formulas) are typically based on a comparison of cell or beam quality (e.g., Reference Signal Received Power (RSRP)) with a threshold.

The control information may collectively indicate, to the UE 1, permission to use the machine learning-based artificial intelligence (i.e., UE-based AI/ML) for a plurality of actions, including the particular action. Alternatively, the control information may separately indicate to the UE 1 whether each of a plurality of actions, including the particular action, is allowed. The control information may specify an action or a category (or group) of actions to which the UE-based AI/ML is allowed to be applied. The control information may specify a function or feature (e.g., mobility, power saving) for which the UE-based AI/ML is allowed to be applied. The control information may specify a sub-function or sub-feature (e.g., cell selection, handover, beam management) to which the UE-based AI/ML is allowed to be applied. The control information may specify a procedure (e.g., RRC re-establishment, beam failure recovery (BFR)) to which the UE-based AI/ML is allowed to be applied. The control information may specify an RRC configuration (e.g., the level of information elements or fields in Abstract Syntax Notation One (ASN.1)) to which the UE-based AI/ML is allowed to be applied.

The control information may indicate a condition under which the execution of the particular action based on an AI/ML inference result is allowed. In this case, only if the indicated condition is met, the UE 1 may perform the particular action triggered by a prediction or decision of the machine learning model (i.e., UE-based AI/ML). The condition under which the particular action is allowed to be performed may indicate a restriction with respect to at least one of a frequency band, a location, or a time.

For example, the condition may specify a location (e.g., a geographic area, cell, or set of cells) where the particular action based on the AI/ML inference result is allowed to be performed. The condition may specify a time or time period during which the execution of the particular action based on the AI/ML inference result is allowed. The condition may specify one or more frequency bands within which the execution of the particular action based on the AI/ML inference result is allowed.

Additionally or alternatively, the condition may be that a consistent failure has been detected. For example, the condition may allow the UE 1 to perform the particular action based on the AI/ML inference result if a given failure is repeatedly detected under the same or similar circumstances (e.g., location, cell, cell pair, time, frequency band, time). The given failure may be, for example, a handover failure or a beam failure. The circumstances can be at least one of location, cell, cell pair, time, frequency band, or time.

Additionally or alternatively, the condition may be that the UE 1 has received a signal from the network (e.g., RAN node 2) indicating a predetermined identifier. The predetermined identifier may be, for example, but not limited to, a Config Set Number or ID, an AI Set Number or ID, or a Combination Set Number or ID. The predetermined identifier may be configured by the network to represent the same or similar situation (e.g., transmit power, antenna tilt, number of downlink beams, or other physical layer settings of the RAN node 2).

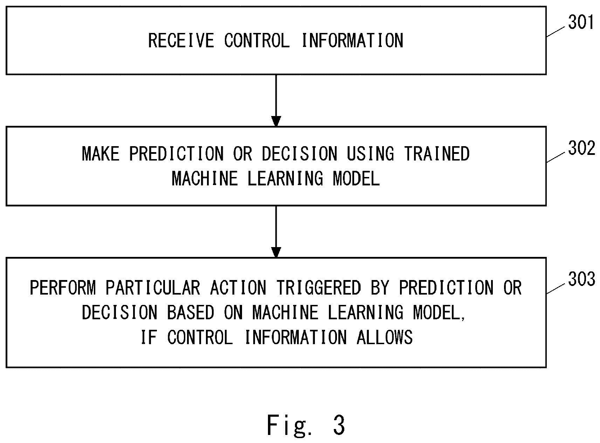

Fig. 3 shows an example of the operation of the UE 1. In step 301, the UE 1 receives the control information described above. In step 302, the UE 1 makes a prediction or decision using a trained machine learning model. In step 303, the UE 1 performs the particular action triggered by the prediction or decision based on the machine learning model, if the control information indicates that it is allowed to do so. In step 303, the UE 1 may consider a condition specified in the control information. As described above, the condition may be a condition for the UE 1 to be allowed to perform the particular action based on the AI/ML inference result. In this case, the UE 1 may only perform the particular action triggered by the prediction or decision of the machine learning model (i.e., UE-based AI/ML) if the indicated condition is met.

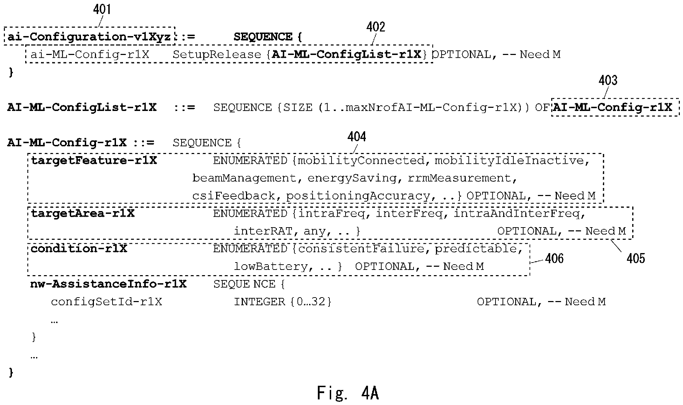

Fig. 4A shows an example of the format of the control information (steps 201 and 301). The Ai-configuration Information Element (IE) 401 shown in Fig. 4A may be transmitted from the RAN node 2 to the UE 1 via a SIB or a dedicated RRC message. The Ai-configuration IE 401 can include an AI-ML- ConfigList IE 402. The AI-ML-ConfigList IE 402 contains one or more AI-ML-Config IEs 403. Each AI-ML-Config IE 403 can include one or any combination of a targetFeature IE 404, a targetArea IE 405, and a condition IE 406.

The targetFeature IE 404 may specify one or more categories (or groups) of actions to which UE-based AI/ML is allowed to be applied. For example, the categories of actions may include at least one of "mobilityConnected", "mobilityIdleInactive", " beamManagement", "energySaving", "rrmMeasurement", " csiFeedback", or "positioningAccuracy" .

For example, if the targetFeature IE 404 is set to "mobilityConnected", this indicates that the UE 1 is allowed to apply UE-based AI/ML to mobility functions performed by the UE 1 in the RRC_Connected state. The application of UE-based AI/ML to mobility functions in the RRC_Connected state may be a handover-related adjustment or a conditional handover (CHO)-related adjustment. The handover-related adjustment may be an adjustment to the timing of measurement report (MR) reporting or an adjustment to an offset value or threshold for an MR event. The CHO-related adjustment may be an adjustment to an offset value or threshold value for a CHO execution condition. Additionally or alternatively, the application of UE-based AI/ML to mobility functions in the RRC_Connected state may be an adjustment related to the addition or modification of a PSCell in Multi-Radio Dual Connectivity (MR-DC) or an adjustment related to Conditional PSCell Addition/Change (CPAC). The PSCell is an abbreviation for Primary SCell or Primary Secondary Cell Group (SCG) Cell.

For example, if targetFeature IE 404 is set to "mobilityIdleInactive", this indicates that the UE is allowed to apply UE-based AI/ML to mobility functions performed by the UE 1 in either or both of the RRC_IDLE and RRC_INACTIVE states. The application of UE-based AI/ML to mobility functions in the RRC_IDLE or RRC_INACTIVE state may mean an adjustment related to cell reselection. The adjustment related to cell reselection may be an adjustment of a parameter used in the cell reselection process. For example, it may be an adjustment of an offset value or threshold, an adjustment of priority per frequency or between frequencies, or an adjustment of priority per network slice or between network slices.

For example, if targetFeature IE 404 is set to "beamManagement", this indicates that the UE 1 is allowed to apply UE-based AI/ML to beam management functions. The application of UE-based AI/ML to beam management functions may mean an adjustment in the UE 1 with respect to beam selection, beam failure detection (BFD), beam failure recovery (BFR). The adjustment regarding beam selection may be an adjustment of an offset value or threshold for radio quality (e.g., RSRP, Reference Signal Received Quality (RSRQ), Received Signal Strength Indicator (RSSI)), or it may be an adjustment of priority per beam or between beams. The adjustment regarding beam failure detection may be an adjustment of a threshold for determining BFD. The adjustment regarding beam failure recovery may be an adjustment of a beam selection criterion (e.g., threshold or reference signal (RS) type (e.g., SSB or CSI-RS)) for BFR.

For example, if targetFeature IE 404 is set to "energySaving", this indicates that the UE 1 is allowed to apply UE-based AI/ML to functions related to energy saving. The application of UE-based AI/ML to energy-saving functions may be to adjust the timing (e.g., period, target frequency) of measurements of either or both of the serving cell and any neighbour cell so that they result (or are expected to result) in energy savings. The measurements may be either or both Radio Link Monitoring (RLM) measurements and Radio Resource Management (RRM) measurements.

For example, if targetFeature IE 404 is set to "rrmMeasurement", this indicates that the UE 1 is allowed to apply UE-based AI/ML to RRM measurement functions. The application of UE-based AI/ML to RRM measurement functions may be an adjustment of the timing of measurements for energy saving as described above. Additionally or alternatively, it may be an adjustment to the frequency of RRM measurements or to the criteria for relaxing the assumed target (i.e., RRM relaxation). For example, a threshold for determining not-at-cell edge or low-mobility may be adjusted. For example, if the UE 1 determines itself as not-at-cell edge or low-mobility, the UE 1 may be allowed to make the RRM measurement period longer than usual or to reduce the target frequency.

For example, if targetFeature IE 404 is set to "csiFeedback", this indicates that the UE 1 is allowed to apply UE-based AI/ML to CSI feedback functions. The application of UE-based AI/ML to CSI feedback functions may be an adjustment of the timing (e.g., period) of CSI reporting to the RAN node 2. Additionally or alternatively, the application of UE-based AI/ML to CSI feedback functions may be to reduce or compress the amount of information in a CSI report (e.g., beam information, channel matrix, precoding matrix).

For example, if targetFeature IE 404 is set to "positioningAccuracy", this indicates that the UE 1 is allowed to apply UE-based AI/ML to functions related to improving positioning accuracy. The application of UE-based AI/ML to functions related to improving positioning accuracy may mean a correction of information used for location estimation, or a correction to a location estimation result.

The targetArea IE 405 may specify one or more areas (i.e., target functional areas to be allowed) where UE-based AI/ML is allowed to be applied. The areas include, for example, at least one of "intraFreq", "interFreq", "intraAndInterFreq", "interRAT", or "any". The term "intraFreq" means cell reselections or handovers within the same frequency band. The term "interFreq" means cell reselections or handovers between different frequency bands. The term "intraAndInterFreq" means cell reselections or handovers within the same frequency band and between different frequency bands. The term "interRAT" means cell selections or handovers between different radio access technologies. The term "any" means that there are no area restrictions. Alternatively, the absence of the targetArea IE 405 in the AI-ML-Config IE 403 may mean that there are no area restrictions. The targetArea may be defined as targetFunc (targetFunction), targetScope, or applicableTarget, and these may indicate one or more target functions (targetFunction), one or more scopes (targetScope), or one or more applicable targets (applicableTarget), respectively, to which the application of UE-based AI/ML is allowed.

The condition IE 406 may specify situations in which UE-based AI/ML is allowed to be applied. For example, the situations may include at least one of "consistentFailure", "predictable", "lowBattery", "gnssAvailable", or "nlos". The term "consistentFailure" refers to a situation where a given failure is detected repeatedly in the same or similar circumstances. The term "predictable" refers to a situation that is predictable based on history. The term "lowBattery" refers to a situation where the battery power of the UE 1 is low. The term "gnssAvailable" refers to a situation in which location information can be acquired by a Global Navigation Satellite System (GNSS). The GNSS may be, for example, Global Positioning System (GPS), Galileo, or Global Navigation Satellite System (GLONASS). The term "nlos" means that the radio environment (or communication environment) of the UE 1 is a non-line-of-sight (NLOS) environment.

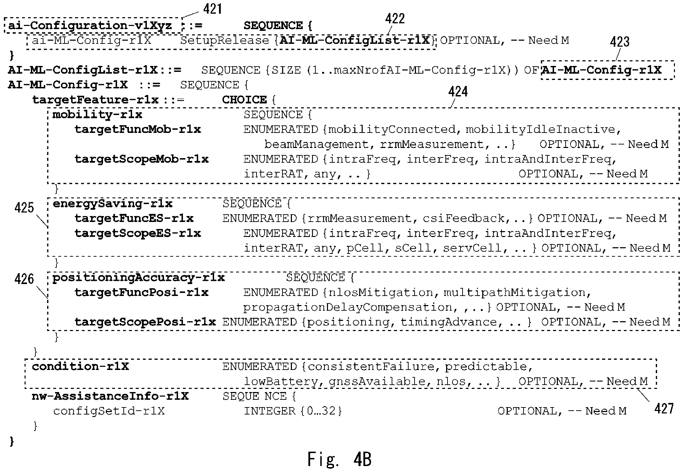

Fig. 4B shows another example of the format of the control information (steps 201 and 301). The Ai-configuration Information Element (IE) 421 shown in Fig. 4B may be transmitted from the RAN node 2 to the UE 1 via a SIB or a dedicated RRC message. The Ai-configuration IE 421 can include an AI-ML-ConfigList IE 422. The AI-ML-ConfigList IE 422 includes one or more AI-ML-Config IEs 423. Each AI-ML-Config IE 423 can include one or any combination of a mobility IE 424, an energySaving IE 425, and a positioningAccuracy IE 426.

The mobility IE 424 specifies a target function (targetFuncMob IE) and target scope (targetScopeMob IE) associated with mobility. The target function may indicate one or more categories (or groups) of actions to which UE-based AI/ML is allowed to be applied. For example, the categories of actions include at least one of "mobilityConnected", "mobilityIdleInactive", " beamManagement", or "rrmMeasurement". The target scope may specify one or more scopes where UE-based AI/ML is allowed to be applied. For example, the target scope includes at least one of "intraFreq", "interFreq", "intraAndInterFreq", "interRAT", or "any".

The energySaving IE 425 specifies a target function (targetFuncES IE) and target scope (targetScopeES IE) associated with energy saving. The target function may indicate one or more categories (or groups) of actions to which UE-based AI/ML is allowed to be applied. For example, the categories of actions includes at least one of "rrmMeasurement" or "csiFeedback". The target scope may specify one or more scopes where UE-based AI/ML is allowed to be applied. For example, the target scope includes at least one of "intraFreq", "interFreq", "intraAndInterFreq", "interRAT", "interRAT" "intraFreq", "interRAT", "any", "pCell", "sCell", or "servCell". The term "pCell" refers to the primary cell of carrier aggregation or the MCG or SCG primary cell of DC. The term "sCell" refers to a secondary cell in DC or carrier aggregation. The term "servCell" refers to a serving cell of the UE 1.

The positioningAccuracy IE 426 specifies a target function (targetFuncPosi IE) and target scope (targetScopePosi IE) associated with positioning accuracy. The target function may indicate one or more categories (or groups) of actions to which UE-based AI/ML is allowed to be applied. For example, the categories of actions include at least one of "nlosMitigation", "multipathMitigation", or "pro pagationDelayCompensation". The term "nlosMitigation" refers to correcting a positioning result (or UL transmission timing) when the UE 1 is in an NLOS environment. The term "multipathMitigation" refers to correcting a positioning result (or UL transmission timing) when the UE 1 is in a multipath environment. The term "propagationDelayCompensation" refers to compensating for the effects of propagation delay (e.g., UL transmission timing). The target scope may specify one or more scopes where UE-based AI/ML is allowed to be applied. For example, the target scope includes at least one of "positioning" or "timingAdvance". The term "positioning" refers to the acquisition of position information via a positioning function. The term "timingAdvance" refers to the calculation of a timing adjustment (Timing Advance (TA)) to be applied by the UE1 for its uplink transmission. The result of the TA calculation by the UE 1 may be reflected in the UL transmission timing of the UE 1 in a Non-Terrestrial Network (NTN), for example, or the result of the TA calculation may be reported from the UE 1 to the RAN node 2.

According to the behavior of the UE 1 and the RAN node 2 described with reference to Fig. 2 to Fig. 4B, the RAN node 2 can control whether the UE 1 is allowed to perform actions based on predictions or decisions made by the UE-based AI/ML. For example, if an action of the UE 1 triggered by AI inference may cause interaction with the network or affect network performance, it may not be appropriate for the UE 1 to perform that action freely. Alternatively, it may not be appropriate for the UE 1 to freely perform an action triggered by AI inference rather than being triggered by a rule (or criterion or formula) defined in the 3GPP specification. The behavior of the UE 1 and the RAN node 2 described with reference to Fig. 2 to Fig. 4B can help to address these issues.

### Second Example Embodiment

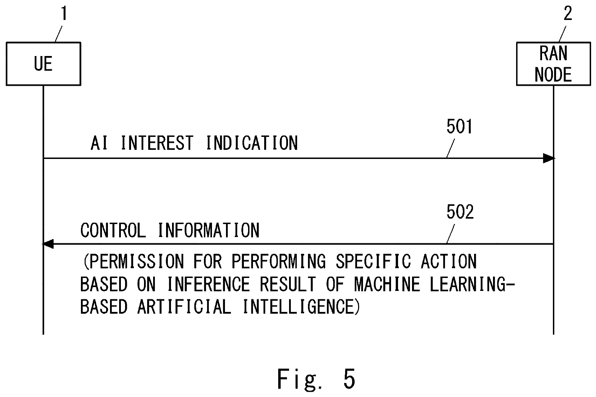

An example of the configuration of a radio communication system according to this example embodiment may be similar to the example shown in Fig. 1. Fig. 5 shows an example of the operation of the UE 1 and RAN node 2 for UE-based AI/ML, i.e., for the UE 1 to perform AI inference on a machine learning model. In step 501, the UE 1 transmits an AI interest indication to the RAN node 2. In one example, the UE 1 may send the AI interest indication in an RRC connection setup, resume, or reestablishment procedure. The RAN node 2 may request the UE 1 to send the AI interest indication.

The AI interest indication may indicate to the RAN node 2 that the UE 1 supports machine learning based artificial intelligence. The AI interest indication may indicate to the RAN node 2 that the UE 1 is interested in performing UE-based AI/ML. The AI interest indication may indicate to the RAN node 2 that the UE 1 requests permission to perform UE-based AI/ML. The AI interest indication may be contained in UE Capability Information.

Additionally or alternatively, the AI interest indication may indicate to the RAN node 2 that the UE 1 wishes to perform a particular action based on a machine-learning-based AI inference result. In other words, the AI interest indication may indicate to the RAN node 2 that the execution of UE-based AI/ML by the UE 1 is expected to be beneficial for performance improvement.

The AI interest indication may indicate a category of AI/ML prediction that the UE 1 wishes to perform. In other words, the AI interest indication may indicate an action or category of actions that the UE 1 wishes to be allowed to apply UE-based AI/ML. The AI interest indication may indicate a function or feature (e.g., mobility, power saving) for which the UE 1 wishes to be allowed to apply UE-based AI/ML. The AI interest indication may indicate a sub-function or sub-feature (e.g., cell selection, handover, beam management) to which the UE 1 wishes to be allowed to apply UE-based AI/ML. The AI interest indication may indicate a procedure (e.g., RRC re-establishment, beam failure recovery (BFR)) to which the UE 1 wishes to be allowed to apply UE-based AI/ML. The AI interest indication may indicate an RRC configuration (e.g., the level of information elements or fields in Abstract Syntax Notation One (ASN.1)) to which the UE 1 wishes to be allowed to apply UE-based AI/ML.

The AI interest indication may indicate the magnitude or the level of benefit that is expected to result from the execution of the AI/ML prediction by the UE 1.

Step 502 is similar to step 201 in Fig. 2. The RAN node 2 transmits control information to the UE 1. The details (e.g., transmission method, content) of the control information are similar to those described in the first example embodiment, so the description of the control information is omitted here. The RAN node 2 may determine whether to transmit the control information (502) based on the AI interest indication (501). The RAN node 2 may determine the content of the control information (502) based on the AI interest indication (501).

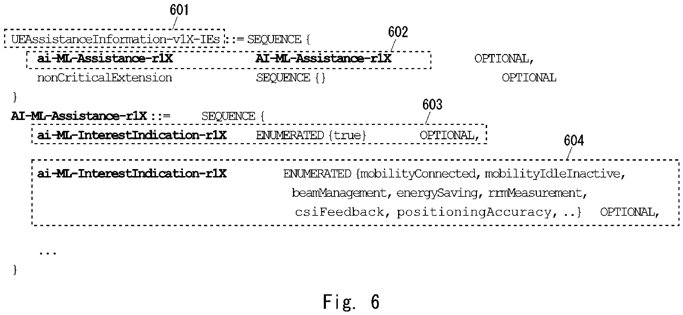

Fig. 6 shows an example of the format of the AI interest indication. An ai-ML-Assistance IE 602 shown in Fig. 6 corresponds to the AI interest indication. The ai-ML-Assistance IE 602 may be included in a UEAssistanceInformation IE 601. The UEAssistanceInformation IE 601 may be transmitted to the RAN node 2 via an RRC message (e.g., RRC Setup Request, RRC Setup Complete, RRC Resume Request, RRC Resume Complete, RRC Re-establishment Request, RRC Re-establishment Complete). The ai-ML-Assistance IE 602 may include an ai-ML-InterestIndication IE 603 or 604.

For example, the ai-ML-InterestIndication IE 603 indicates that the UE 1 is interested in performing UE-based AI/ML. If the UE 1 wishes to obtain permission to perform UE-based AI/ML, the UE 1 may include the ai-ML-InterestIndication IE 603 in the UEAssistanceInformation IE 601.

On the other hand, the ai-ML-InterestIndication IE 604 indicates a category of AI/ML inferences that the UE 1 wishes to perform. In other words, the ai-ML-InterestIndication IE 604 indicates an action or categories of actions that the UE 1 wishes to be allowed to apply UE-based AI/ML. For example, the category includes at least one of "mobility Connected", "mobilityIdleInactive", "beamManagement "energySaving", "rrmMeasurement", "csiFeedback" or "positioningAccuracy". What each of these means (indicates) can be as described above.

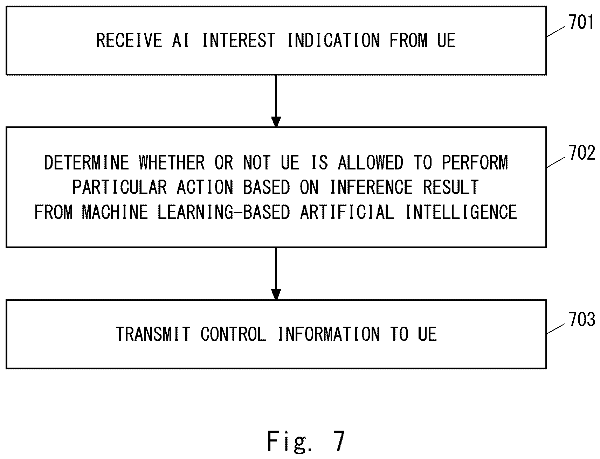

Fig. 7 is a flowchart showing an example of the operation of the RAN node 2. In step 701, the RAN node 2 receives an AI interest indication from the UE 1. In step 702, the RAN node 2 determines whether the UE 1 is allowed to perform a particular action based on an inference result of the machine learning-based artificial intelligence. In step 703, the RAN node 2 transmits control information to the UE 1. The control information in step 703 indicates whether or not the UE 1 is allowed to perform the particular action based on an inference result of the machine learning-based artificial intelligence. The details (e.g., transmission method, content) of the control information are similar to those described in the first example embodiment, so the description of the control information is omitted here.

According to the behavior of the UE 1 and the RAN node 2 described with reference to Fig. 5 to Fig. 7, the RAN node 2 can receive an AI interest indication (steps 501, 701) from the UE 1 prior to sending control information (steps 502, 703) for permission to perform UE-based AI/ML. For example, based on the AI interest indication received from the UE 1, the RAN node 2 can determine whether or not to allow the UE 1 to perform UE-based AI/ML. Alternatively, based on the AI interest indication received from the UE 1, the RAN node 2 can determine one or more actions (or categories of actions) for which the UE 1 is allowed to perform UE-based AI/ML.

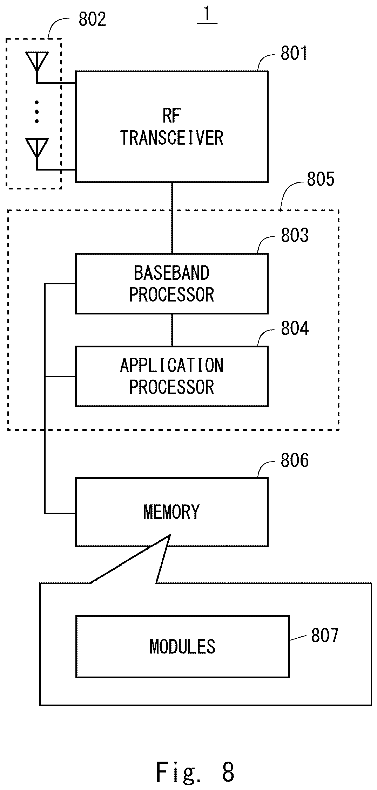

The following provides configuration examples of the UE 1 and the RAN node 2 according to the above described example embodiments. Fig. 8 is a block diagram showing an example configuration of the UE 1. The radio frequency (RF) transceiver 801 performs analog RF signal processing to communicate with a RAN node. The RF transceiver 801 may include a plurality of transceivers. The analog RF signal processing performed by the RF transceiver 801 includes frequency up-conversion, frequency down-conversion, and amplification. The RF transceiver 801 is coupled to the antenna array 802 and the baseband processor 803. The RF transceiver 801 receives modulation symbol data (or OFDM symbol data) from the baseband processor 803, generates a transmission RF signal, and supplies the transmission RF signal to the antenna array 802. The RF transceiver 801 generates a baseband reception signal based on the reception RF signal received by the antenna array 802 and supplies the baseband reception signal to the baseband processor 803. The RF transceiver 801 may include an analog beamformer circuit for beamforming. The analog beamformer circuit includes, for example, a plurality of phase shifters and a plurality of power amplifiers.

The baseband processor 803 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 803 may include signal processing in the Service Data Adaptation Protocol (SDAP) layer, Packet Data Convergence Protocol (PDCP) layer, Radio Link Control (RLC) layer, Medium Access Control (MAC) layer, and Physical (PHY) layer. The control-plane processing performed by the baseband processor 803 may also include processing of Non-Access Stratum (NAS) protocols, Radio Resource Control (RRC) protocols, MAC Control Elements (CEs), and Downlink Control Information (DCIs).

The baseband processor 803 may perform Multiple Input Multiple Output (MIMO) encoding and precoding for beamforming.

The baseband processor 803 may include a modem processor (e.g., Digital Signal Processor (DSP)) that performs the digital baseband signal processing and a protocol stack processor (e.g., Central Processing Unit (CPU) or Micro Processing Unit (MPU)) that performs the control-plane processing. In this case, the protocol stack processor performing the control-plane processing may be integrated with an application processor 804 described later.

The application processor 804 may also be referred to as a CPU, an MPU, a microprocessor, or a processor core. The application processor 804 may include a plurality of processors (processor cores). The application processor 804 loads a system software program (Operating System (OS)) and various application programs (e.g., a voice call application, a web browser, a mailer, a camera operation application, a music player application) from a memory 806 or from another memory (not shown) and executes these programs, thereby providing various functions of the UE 1.

In some implementations, as represented by the dashed line (805) in Fig. 8, the baseband processor 803 and the application processor 804 may be integrated on a single chip. In other words, the baseband processor 803 and the application processor 804 may be implemented in a single System on Chip (SoC) device 805. A SoC device may be referred to as a system Large Scale Integration (LSI) or a chipset.

The memory 806 is a volatile memory or a non-volatile memory, or a combination thereof. The memory 806 may include a plurality of physically independent memory devices. The volatile memory is, for example, Static Random Access Memory (SRAM), Dynamic RAM (DRAM), or a combination thereof. The non-volatile memory may be a Mask Read Only Memory (MROM), an Electrically Erasable Programmable ROM (EEPROM), a flash memory, a hard disk drive, or any combination thereof. The memory 806 may include, for example, an external memory device that can be accessed by the baseband processor 803, the application processor 804, or the SoC 805. The memory 806 may include an internal memory device that is integrated into the baseband processor 803, the application processor 804, or the SoC 805. Further, the memory 806 may include a memory in a Universal Integrated Circuit Card (UICC).

The memory 806 may store one or more software modules (computer programs) 807 including instructions and data for processing by the UE 1 described in the above example embodiments. In some implementations, the baseband processor 803 or the application processor 804 may load the software module(s) 807 from the memory 806 and execute the loaded software module(s) 807, thereby performing the processing of the UE 1 described in the above example embodiments with reference to the drawings.

The control-plane processing and operations performed by the UE 1 described in the above embodiments can be achieved by elements other than the RF transceiver 801 and the antenna array 802, i.e., achieved by the memory 806, which stores the software modules 807, and one or both of the baseband processor 803 and the application processor 804.

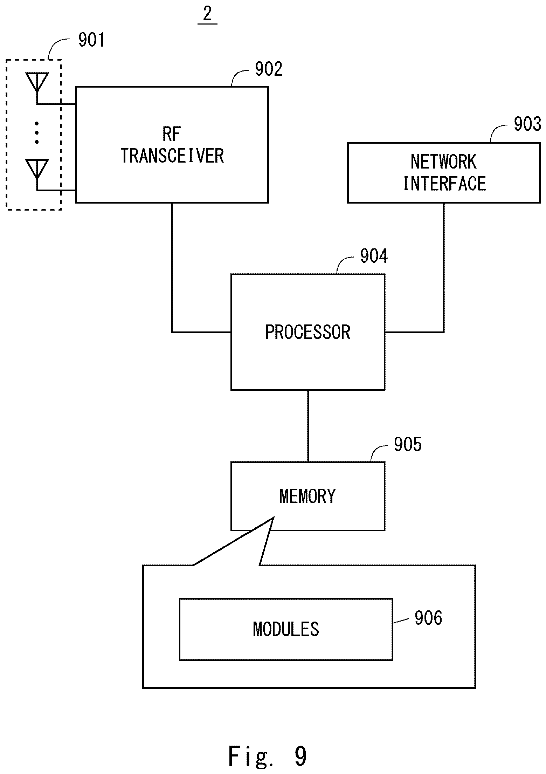

Fig. 9 is a block diagram showing an example configuration of the RAN node 2 according to the above example embodiments. Referring to Fig. 9, the RAN node 2 includes a Radio Frequency transceiver 901, a network interface 903, a processor 904, and a memory 905. The RF transceiver 901 performs analog RF signal processing to communicate with UEs including the UE 1. The RF transceiver 901 may include a plurality of transceivers. The RF transceiver 901 is coupled to an antenna array 902 and the processor 904. The RF transceiver 901 receives modulated symbol data from the processor 904, generates a transmission RF signal, and supplies the transmission RF signal to the antenna array 902. Further, the RF transceiver 901 generates a baseband reception signal based on a reception RF signal received by the antenna array 902 and supplies the baseband reception signal to the processor 904. The RF transceiver 901 may include an analog beamformer circuit for beam forming. The analog beamformer circuit includes, for example, a plurality of phase shifters and a plurality of power amplifiers.

The network interface 903 is used to communicate with network nodes (e.g., SN 2, and control and transfer nodes in the core network). The network interface 903 may include, for example, a network interface card (NIC) conforming to the IEEE 802.3 series.

The processor 904 performs digital baseband signal processing (i.e., data-plane processing) and control-plane processing for radio communication. The processor 904 may include a plurality of processors. The processor 904 may include, for example, a modem processor (e.g., Digital Signal Processor (DSP)) that performs digital baseband signal processing and a protocol stack processor (e.g., Central Processing Unit (CPU) or Micro Processing Unit (MPU) that performs the control-plane processing. The processor 904 may include a digital beamformer module for beam forming. The digital beamformer module may include a Multiple Input Multiple Output (MIMO) encoder and a precoder.

The memory 905 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disk drive, or any combination thereof. The memory 905 may include a storage located that is separate from the processor 904. In this case, the processor 904 may access the memory 905 through the network interface 903 or an I/O interface not shown.

The memory 905 may store one or more software modules (computer programs) 906 including instructions and data for performing the processing of the RAN node 2 described in the above example embodiments. In some implementations, the processor 904 may be configured to load these software modules 906 from the memory 905 and execute the loaded software modules, thereby performing the processing of the RAN node 2 described in the above example embodiments.

If the RAN node 2 is a CU (e.g., gNB-CU) or CU-CP (e.g., gNB-CU-CP), the RAN node 2 does not need to include the RF transceiver 901 (and antenna array 902).

As described using Figs. 8 and 9, each of the processors in the UE 1 and RAN node 2 according to the example embodiments described above can execute one or more programs, containing a set of instructions, for causing a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, but not limitation, transitory computer readable media or communication media can include electrical, optical, acoustical, or other form of propagated signals.

### Other Example Embodiments

The example embodiments described above can be applied to Non-Terrestrial Networks (NTNs). The above example embodiments can be applied to various emerging applications, such as vehicle-to-everything (V2X), high-speed trains (HSTs), unmanned aerial vehicles (UAVs), uncrewed aerial vehicles (UAVs), urban air mobility (UAM).

The example embodiments described above can be applied to a Secondary Cell Group (SCG) in Dual Connectivity (e.g., MR-DC). In this case, the RAN node 2 may be a secondary node (Secondary Node (SN)). In this case, the SN can send and receive RRC messages to and from the UE 1, directly in the SCG using a signaling radio bearer (SRB3), or via the Master Node (MN). Additionally or alternatively, the RAN node 2 may be a Master Node (MN) and be responsible for forwarding RRC messages between the SN and the UE 1.

The RAN node 2 in the example embodiments described above may be realized in a C-RAN deployment. For example, the RAN node 2 may include a CU (e.g., gNB-CU) and a DU (e.g., gNB-DU). The CU may decide whether or not to allow the UE 1 to perform a particular action based on an inference result of the machine learning-based artificial intelligence, and send control information indicating the result of such decision to the UE 1 (via the DU). Further or alternatively, the DU may decide whether or not to allow the radio terminal to perform a particular action based on an inference result of the machine learning-based artificial intelligence, and send control information indicating the result of such decision to the CU, which may in turn send it to the UE 1. Depending on the subject matter or the type or content of the subject matter allowed to the UE 1, the control by the CU and the DU described above may be selected or combined.

The above-described example embodiments are merely examples of applications of the technical ideas obtained by the inventor. These technical ideas are not limited to the above-described example embodiments and various modifications can be made thereto.

For example, the whole or part of the example embodiments disclosed above can be described as, but not limited to, the following supplementary notes.

### (Supplementary Note 1)

A radio terminal comprising:
at least one memory; and
at least one processor coupled to the at least one memory and configured to:
   receive, from a network, control information indicating whether or not the radio terminal is allowed to perform a particular action based on an inference result of machine learning-based artificial intelligence;
make a prediction or decision using a trained machine learning model; and
if the control information allows performing the particular action based on the inference result, perform the particular action triggered by the prediction or decision.

### (Supplementary Note 2)

The radio terminal according to Supplementary Note 1, wherein the control information indicates whether or not performing the particular action based on the inference result is allowed instead of, or in addition to, performing the particular action based on a predefined rule.

### (Supplementary Note 3)

The radio terminal according to Supplementary Note 2, wherein the predefined rule is a rule predefined in a Third Generation Partnership Project (3GPP) specification, or a rule preconfigured by the network.

### (Supplementary Note 4)

The radio terminal according to any one of Supplementary Notes 1 to 3, wherein the control information separately indicates whether each of a plurality of actions, including the particular action, is allowed.

### (Supplementary Note 5)

The radio terminal according to any one of Supplementary Notes 1 to 3, wherein the control information collectively indicates permission to use the machine learning-based artificial intelligence for a plurality of actions, including the particular action.

### (Supplementary Note 6)

The radio terminal according to any one of Supplementary Notes 1 to 5, wherein
the control information indicates a condition under which performing the particular action based on the inference result is allowed, and
the at least one processor is configured to perform the particular action triggered by the prediction or decision only if the condition is met.

### (Supplementary Note 7)

The radio terminal according to Supplementary Note 6, wherein the condition indicates a restriction with respect to at least one of a frequency band, a location, or a time.

### (Supplementary Note 8)

The radio terminal according to any one of Supplementary Notes 1 to 7, wherein the control information is transmitted by the network in a case where performing the particular action based on the inference result is allowed.

### (Supplementary Note 9)

The radio terminal according to any one of Supplementary Notes 1 to 8, wherein the at least one processor is configured to inform the network, prior to receiving the control information, that the radio terminal supports machine learning-based artificial intelligence.

### (Supplementary Note 10)

The radio terminal according to any one of Supplementary Notes 1 to 9, wherein the at least one processor is configured to inform the network, prior to receiving the control information, that the radio terminal desires to perform the particular action based on an inference result of the machine learning-based artificial intelligence.

### (Supplementary Note 11)

The radio terminal according to any one of Supplementary Notes 1 to 10, wherein the particular action is related to beam management or mobility.

### (Supplementary Note 12)

The radio terminal according to any one of Supplementary Notes 1 to 11, wherein the particular action includes at least one of cell reselection, sending a measurement report, performing conditional mobility, or selecting a downlink beam.

### (Supplementary Note 13)

The radio terminal according to any one of Supplementary Notes 1 to 12, wherein the particular action includes transmitting, to the network, assistance information indicating a result of the prediction or decision using the trained machine learning model.

### (Supplementary Note 14)

The radio terminal according to Supplementary Note 13, wherein the assistance information is used to train a second machine learning model relating to optimization of a radio access network or to perform an inference on a second trained machine learning model relating to optimization of the radio access network.

### (Supplementary Note 15)

A method performed by a radio terminal, the method comprising:
receiving, from a network, control information indicating whether or not the radio terminal is allowed to perform a particular action based on an inference result of machine learning-based artificial intelligence;
making a prediction or decision using a trained machine learning model; and
if the control information allows performing the particular action based on the inference result, performing the particular action triggered by the prediction or decision.

### (Supplementary Note 16)

A program for causing a computer to perform a method for a radio terminal, the method comprising:
receiving, from a network, control information indicating whether or not the radio terminal is allowed to perform a particular action based on an inference result of machine learning-based artificial intelligence;
making a prediction or decision using a trained machine learning model; and
if the control information allows performing the particular action based on the inference result, performing the particular action triggered by the prediction or decision.

### (Supplementary Note 17)

A radio access network node comprising:
at least one memory; and
at least one processor coupled to the at least one memory and configured to transmit, to a radio terminal, control information indicating whether or not the radio terminal is allowed to perform a particular action based on an inference result of machine learning-based artificial intelligence,
wherein the control information causes the radio terminal to perform the particular action triggered by a prediction or decision using a trained machine learning model, if the control information allows performing the particular action based on the inference result.

### (Supplementary Note 18)

The radio access network node according to Supplementary Note 17, wherein the control information indicates whether or not performing the particular action based on the inference result is allowed instead of, or in addition to, performing the particular action based on a predefined rule.

### (Supplementary Note 19)

The radio access network node according to Supplementary Note 18, wherein the predefined rule is a rule predefined in a Third Generation Partnership Project (3GPP) specification, or a rule preconfigured by the network.

### (Supplementary Note 20)

The radio access network node according to any one of Supplementary Notes 17 to 19, wherein the control information separately indicates whether each of a plurality of actions, including the particular action, is allowed.

### (Supplementary Note 21)

The radio access network node according to any one of Supplementary Notes 17 to 19, wherein the control information collectively indicates permission to use the machine learning-based artificial intelligence for a plurality of actions, including the particular action.

### (Supplementary Note 22)

The radio access network node according to any one of Supplementary Notes 17 to 21, wherein
the control information indicates a condition under which performing the particular action based on the inference result is allowed, and
the control information causes the radio terminal to perform the particular action triggered by the prediction or decision only if the condition is met.

### (Supplementary Note 23)

The radio access network node according to Supplementary Note 22, wherein the condition indicates a restriction with respect to at least one of a frequency band, a location, or a time.

### (Supplementary Note 24)

The radio access network node according to any one of Supplementary Notes 17 to 23, wherein the at least one processor is configured to transmit the control information in a case where performing the particular action based on the inference result is allowed.

### (Supplementary Note 25)

The radio access network node according to any one of Supplementary Notes 17 to 24, wherein the at least one processor is configured to be informed by the radio terminal, prior to transmitting the control information, that the radio terminal supports machine learning-based artificial intelligence.

### (Supplementary Note 26)

The radio access network node according to any one of Supplementary Notes 17 to 25, wherein the at least one processor is configured to be informed by the radio terminal, prior to transmitting the control information, that the radio terminal desires to perform the particular action based on an inference result of the machine learning-based artificial intelligence.

### (Supplementary Note 27)

The radio access network node according to any one of Supplementary Notes 17 to 26, wherein the particular action is related to beam management or mobility.

### (Supplementary Note 28)

The radio access network node according to any one of Supplementary Notes 17 to 27, wherein the particular action includes at least one of cell reselection, sending a measurement report, performing conditional mobility, or selecting a downlink beam.

### (Supplementary Note 29)

The radio access network node according to any one of Supplementary Notes 17 to 28, wherein the particular action includes transmitting, to the radio access network node, assistance information indicating a result of the prediction or decision using the trained machine learning model.

### (Supplementary Note 30)

The radio access network node according to Supplementary Note 29, wherein the assistance information is used to train a second machine learning model relating to optimization of a radio access network or to perform an inference on a second trained machine learning model relating to optimization of the radio access network.

### (Supplementary Note 31)

A method performed by a radio access network node, the method comprising:
transmitting, to a radio terminal, control information indicating whether or not the radio terminal is allowed to perform a particular action based on an inference result of machine learning-based artificial intelligence,
wherein the control information causes the radio terminal to perform the particular action triggered by a prediction or decision using a trained machine learning model, if the control information allows performing the particular action based on the inference result.

### (Supplementary Note 32)

A program for causing a computer to perform a method for a radio access network node,
the method comprising transmitting, to a radio terminal, control information indicating whether or not the radio terminal is allowed to perform a particular action based on an inference result of machine learning-based artificial intelligence,
wherein the control information causes the radio terminal to perform the particular action triggered by a prediction or decision using a trained machine learning model, if the control information allows performing the particular action based on the inference result.

This application is based upon and claims the benefit of priority from Japanese Patent Application No. 2021-182104, filed on November 8, 2021, the disclosure of which is incorporated herein in its entirety by reference.

### Reference Signs List

- 1: UE
- 2: RAN Node
- 803: Baseband Processor
- 804: Application Processor
- 806: Memory
- 807: Modules
- 904: Processor
- 905: Memory
- 906: Modules

## Claims

1. A radio terminal comprising:
at least one memory; and
at least one processor coupled to the at least one memory and configured to:
receive, from a network, control information indicating whether or not the radio terminal is allowed to perform a particular action based on an inference result of machine learning-based artificial intelligence;
make a prediction or decision using a trained machine learning model; and
if the control information allows performing the particular action based on the inference result, perform the particular action triggered by the prediction or decision.

2. The radio terminal according to claim 1, wherein the control information indicates whether or not performing the particular action based on the inference result is allowed instead of, or in addition to, performing the particular action based on a predefined rule.

3. The radio terminal according to claim 2, wherein the predefined rule is a rule predefined in a Third Generation Partnership Project (3GPP) specification, or a rule preconfigured by the network.

4. The radio terminal according to any one of claims 1 to 3,
wherein the control information separately indicates whether each of a plurality of actions, including the particular action, is allowed.

5. The radio terminal according to any one of claims 1 to 3,
wherein the control information collectively indicates permission to use the machine learning-based artificial intelligence for a plurality of actions, including the particular action.

6. The radio terminal according to any one of claims 1 to 5, wherein
the control information indicates a condition under which performing the particular action based on the inference result is allowed, and
the at least one processor is configured to perform the particular action triggered by the prediction or decision only if the condition is met.

7. The radio terminal according to claim 6, wherein the condition indicates a restriction with respect to at least one of a frequency band, a location, or a time.

8. The radio terminal according to any one of claims 1 to 7,
wherein the control information is transmitted by the network in a case where performing the particular action based on the inference result is allowed.

9. The radio terminal according to any one of claims 1 to 8,
wherein the at least one processor is configured to inform the network, prior to receiving the control information, that the radio terminal supports machine learning-based artificial intelligence.

10. The radio terminal according to any one of claims 1 to 9,
wherein the at least one processor is configured to inform the network, prior to receiving the control information, that the radio terminal desires to perform the particular action based on an inference result of the machine learning-based artificial intelligence.

11. The radio terminal according to any one of claims 1 to 10,
wherein the particular action is related to beam management or mobility.

12. The radio terminal according to any one of claims 1 to 11,
wherein the particular action includes at least one of cell reselection, sending a measurement report, performing conditional mobility, or selecting a downlink beam.

13. The radio terminal according to any one of claims 1 to 12,
wherein the particular action includes transmitting, to the network, assistance information indicating a result of the prediction or decision using the trained machine learning model.

14. The radio terminal according to claim 13, wherein the assistance information is used to train a second machine learning model relating to optimization of a radio access network or to perform an inference on a second trained machine learning model relating to optimization of the radio access network.

15. A method performed by a radio terminal, the method comprising:
receiving, from a network, control information indicating whether or not the radio terminal is allowed to perform a particular action based on an inference result of machine learning-based artificial intelligence;
making a prediction or decision using a trained machine learning model; and
if the control information allows performing the particular action based on the inference result, performing the particular action triggered by the prediction or decision.

16. A non-transitory computer-readable medium storing a program for causing a computer to perform a method for a radio terminal, the method comprising:
receiving, from a network, control information indicating whether or not the radio terminal is allowed to perform a particular action based on an inference result of machine learning-based artificial intelligence;
making a prediction or decision using a trained machine learning model; and
if the control information allows performing the particular action based on the inference result, performing the particular action triggered by the prediction or decision.

17. A radio access network node comprising:
at least one memory; and
at least one processor coupled to the at least one memory and configured to transmit, to a radio terminal, control information indicating whether or not the radio terminal is allowed to perform a particular action based on an inference result of machine learning-based artificial intelligence,
wherein the control information causes the radio terminal to perform the particular action triggered by a prediction or decision using a trained machine learning model, if the control information allows performing the particular action based on the inference result.

18. The radio access network node according to claim 17, wherein the control information indicates whether or not performing the particular action based on the inference result is allowed instead of, or in addition to, performing the particular action based on a predefined rule.

19. The radio access network node according to claim 18, wherein the predefined rule is a rule predefined in a Third Generation Partnership Project (3GPP) specification, or a rule preconfigured by the network.

20. The radio access network node according to any one of claims 17 to 19, wherein the control information separately indicates whether each of a plurality of actions, including the particular action, is allowed.

21. The radio access network node according to any one of claims 17 to 19, wherein the control information collectively indicates permission to use the machine learning-based artificial intelligence for a plurality of actions, including the particular action.

22. The radio access network node according to any one of claims 17 to 21, wherein
the control information indicates a condition under which performing the particular action based on the inference result is allowed, and
the control information causes the radio terminal to perform the particular action triggered by the prediction or decision only if the condition is met.

23. The radio access network node according to claim 22, wherein the condition indicates a restriction with respect to at least one of a frequency band, a location, or a time.

24. The radio access network node according to any one of claims 17 to 23, wherein the at least one processor is configured to transmit the control information in a case where performing the particular action based on the inference result is allowed.

25. The radio access network node according to any one of claims 17 to 24, wherein the at least one processor is configured to be informed by the radio terminal, prior to transmitting the control information, that the radio terminal supports machine learning-based artificial intelligence.

26. The radio access network node according to any one of claims 17 to 25, wherein the at least one processor is configured to be informed by the radio terminal, prior to transmitting the control information, that the radio terminal desires to perform the particular action based on an inference result of the machine learning-based artificial intelligence.

27. The radio access network node according to any one of claims 17 to 26, wherein the particular action is related to beam management or mobility.

28. The radio access network node according to any one of claims 17 to 27, wherein the particular action includes at least one of cell reselection, sending a measurement report, performing conditional mobility, or selecting a downlink beam.

29. The radio access network node according to any one of claims 17 to 28, wherein the particular action includes transmitting, to the radio access network node, assistance information indicating a result of the prediction or decision using the trained machine learning model.

30. The radio access network node according to claim 29, wherein the assistance information is used to train a second machine learning model relating to optimization of a radio access network or to perform an inference on a second trained machine learning model relating to optimization of the radio access network.

31. A method performed by a radio access network node, the method comprising:
transmitting, to a radio terminal, control information indicating whether or not the radio terminal is allowed to perform a particular action based on an inference result of machine learning-based artificial intelligence,
wherein the control information causes the radio terminal to perform the particular action triggered by a prediction or decision using a trained machine learning model, if the control information allows performing the particular action based on the inference result.

32. A non-transitory computer-readable medium storing a program for causing a computer to perform a method for a radio access network node,
the method comprising transmitting, to a radio terminal, control information indicating whether or not the radio terminal is allowed to perform a particular action based on an inference result of machine learning-based artificial intelligence,
wherein the control information causes the radio terminal to perform the particular action triggered by a prediction or decision using a trained machine learning model, if the control information allows performing the particular action based on the inference result.
